# EUROPÄISCHE PATENTSCHRIFT

(11) **EP 3 601 424 B1**
(45) Veröffentlichungstag und Bekanntmachung des Hinweises auf die Patenterteilung: **12.06.2024**
(21) Anmeldenummer: 18711981.3
(22) Anmeldetag: 26.03.2018
(51) Int. Cl.: C08K 5/00, C08K 5/521, C08K 5/5313, C08K 5/5399, C08K 7/14

(54) **FLAMMHEMMENDE POLYAMID-FORMMASSEN**
FLAME-RETARDANT POLYAMIDE MOULDING MASSES
SUBSTANCES MOULÉES EN POLYAMIDE IGNIFUGE

(30) Priorität: 28.03.2017 EP 17163318
(43) Veröffentlichungstag der Anmeldung: 05.02.2020
(73) Patentinhaber: BASF SE, 67056 Ludwigshafen am Rhein (DE)
(72) Erfinder: KRAEMER, Roland Helmut, Shanghai 200137 (CN); WAGNER, Sebastian, 67056 Ludwigshafen (DE)
(74) Vertreter: BASF IP Association
(86) Internationale Anmeldenummer: PCT/EP2018/057652
(87) Internationale Veröffentlichungsnummer: WO 2018/178016

(56) Entgegenhaltungen:
- JP-A- 2014 152 322
- US-A1- 2008 161 490
- US-A1- 2010 116 542
- DATABASE WPI Week 201679 Thomson Scientific, London, GB; AN 2016-516329 XP002773710, -& CN 105 825 944 A (ANHUI HAIYUAN TEZHONG CABLE CO LTD) 3. August 2016 (2016-08-03)

## Beschreibung

Die Erfindung betrifft glasfaserverstärkte thermoplastische Formmassen auf Basis von Polyamid, die flammhemmend ausgerüstet sind.

Flammschutzmittel für thermoplastische Polymere sind an sich bekannt. In der DE-A 199 60 671 sind übliche Flammschutzmittel wie Phosphinsäuresalze und Melaminverbindungen beschrieben.

In der JP 2014-152322 sind flammhemmende glasfaserverstärkte Polyamidharze beschrieben, die Organophosphinate, Melaminpolyphosphate und Phosphazen-Verbindungen als flammhemmende Additive enthalten. Die in den Beispielen aufgeführten Formmassen enthalten 55,0 Gew.-% Glasfasern, 2,5 bis 3,0 Gew.-% Phosphazen-Verbindungen, 0,5 bis 1,0 Gew.-% Melaminpolyphosphat und 10,0 bis 15,0 Gew.-% DEPAL. Die Formmasse gemäß Beispiel 2 enthält 3,0 Gew.-% PA 6, 23,0 Gew.-% PA66, 5,0 Gew.-% PA 6T/6I, 10,0 Gew.-% DEPAL, 1,0 Gew.-% Melaminpolyphosphat, 3,0 Gew.-% Phosphazen-Verbindung und 55,0 Gew.-% Glasfasern. Es werden UL94-Testergebnisse für 0,8 mm dicke Platten aufgeführt. Glühdrahtprüfungen wurden nicht durchgeführt.

US 2008/161490 A1 betrifft halogenfreie flammwidrige thermoplastische Formmassen auf der Basis von Polyamiden; die Formmassen enthalten ein Metallphosphinat oder Phosphinsäuresalz oder Diphosphinsäuresalz neben Melamincyanurat, einem weiteren stickstoffhaltigen Flammschutzmittel und einer Sauerstoff, Stickstoff oder Schwefel enthaltenden Metallkomponente. Gemäß den Beispielen werden die Phosphinsäuresalze oder Diphosphinsäuresalze mit Melamincyanurat, Melaminpolyphosphat und Zinkborat kombiniert.

Derartige Formmassen bestehen zwar die UL94-Tests für 0,4 mm und 0,8 mm dicke Prüfkörper, nicht jedoch den Glühdrahttest am tatsächlichen Bauteil, z. B. einem Stecker mit unterschiedlicher Wandstärke. Bei Verwendung der zum Bestehen der Bauteilprüfung erforderlichen Menge von Phosphazen-Verbindungen und Melaminpolyphosphat tritt eine unerwünschte Wechselwirkung beider Komponenten auf, die schwarze Einfärbungen im Material verursacht und zur Bildung flüchtiger Verbindungen führt, was die Verarbeitung zu hochwertigen Bauteilen unmöglich macht.

Aufgabe der Erfindung ist die Bereitstellung von speziellen Mischungen flammhemmender Einsatzstoffe, die zu glasfaserverstärkten Polyamid-Formmassen führen, die neben den UL94-Anforderungen auch den Glühdrahttest in seinen verschiedenen Formen bestehen und sich darüber hinaus ohne Verfärbungen verarbeiten lassen.

Die Aufgabe wird gelöst durch eine thermoplastische Formmasse enthaltend
a) 25,0 bis 64,5 Gew.-% mindestens eines thermoplastischen Polyamids als Komponente A,
b) 2,0 bis 8,0 Gew.-% mindestens eines Phosphazens der allgemeinen Formel (IX) oder (X) 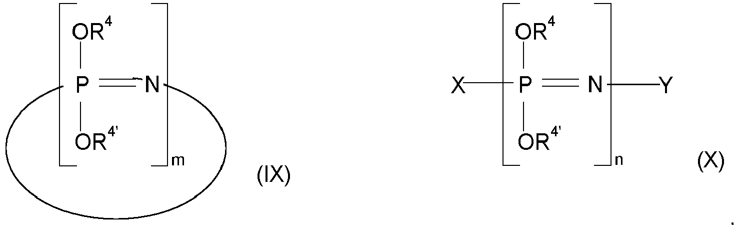 worin m eine ganze Zahl von 3 bis 25 ist und R⁴ und R^{4'} gleich oder verschieden sind und für C₁-C₂₀-Alkyl, C₆-C₃₀-Aryl, C₆-C₃₀-Arylalkyl oder C₆-C₃₀-Alkyl substituiertes Aryl stehen oder lineare Phosphazene der allgemeinen Formel (X),
   n für 3 bis 1000 und X für -N = P(OPh)₃ oder -N = P(O)OPh und Y für -P(OPh)₄ oder -P(O)(OPh)₂ steht,
   als Komponente B,
c) 1,5 bis 6,0 Gew.-% mindestens eines aliphatischen oder aromatischen Esters der Phosphorsäure oder Polyphosphorsäure als Komponente C,
d) 5,0 bis 30,0 Gew.-% mindestens eines Metallphosphinats oder Phosphinsäuresalzes der allgemeinen Formel (I) oder Diphosphinsäuresalzes der allgemeinen Formel (II) oder deren Polymere 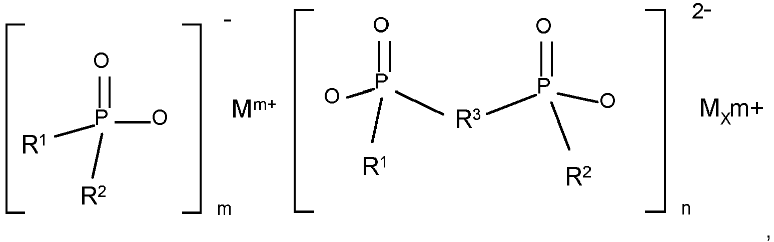 worin
   - R¹, R²: gleich oder verschieden sind und Wasserstoff, C₁-C₆-Alkyl, linear oder verzweigt, und/oder Aryl bedeuten;
   - R³: C₁-C₁₀-Alkylen, linear oder verzweigt, C₆-C₁₀-Arylen, -Alkylarylen oder -Aryl-alkylen;
   - M: Mg, Ca, AI, Sb, Sn, Ge, Ti, Zn, Fe, Zr, Ce, Bi, Sr, Mn, Li, Na, K und/oder eine protonierte Stickstoffbase;
   - m: 1 bis 4; n 1 bis 4; x 1 bis 4 bedeuten, vorzugsweise m = 3, x = 3,
   als Komponente D,
e) 26,0 bis 65,0 Gew.-% Glasfasern als Komponente E,
f) 0 bis 10,0 Gew.-% weiterer Hilfsstoffe als Komponente F,
   wobei die Gesamtmenge der Komponenten A bis E 100,0 Gew.-% ergibt.

Vorzugsweise enthält die erfindungsgemäße Formmasse kein Melaminpolyphosphat (MPP), wie es weiter unten erläutert ist.

Die Aufgabe wird zudem gelöst durch ein Verfahren zur Herstellung derartiger thermoplastischer Formmassen durch Vermischen der Inhaltsstoffe, durch Verwendung der thermoplastischen Formmassen zur Herstellung von Formkörpern, Fasern oder Folien, durch Formkörper, Fasern oder Folien aus einer derartigen thermoplastischen Formmasse und durch Verfahren zur Herstellung von Formkörpern, Fasern oder Folien aus dieser Formmasse durch Aufschmelzen, Extrudieren und nachfolgende Formgebung der thermoplastischen Formmasse.

Bei mehr als 6,0 Gew.-% flammhemmendender Melaminverbindungen wird andererseits die UL94-Prüfung nicht mehr bestanden.

Gemäß einer Ausführungsform der Erfindung enthalten die erfindungsgemäßen Formmassen kein Melamincyanurat. Vorzugsweise enthalten die erfindungsgemäßen Formmassen maximal 5,0 Gew.-%, besonders bevorzugt maximal 2,0 Gew.-%, insbesondere keine flammhemmenden Melaminverbindungen wie Melaminpolyphosphat und Melamincyanurat.

Es wurde erfindungsgemäß gefunden, dass bei einem Anteil an Phosphazen von 2,0 bis 8,0 Gew.-% in Kombination mit 1,5 bis 6,0 Gew.-% mindestens eines aliphatischen oder aromatischen Esters der Phosphorsäure oder Polyphosphorsäure in einer thermoplastischen Formmasse alle Anforderungen der Glühdraht- und UL94-Prüfung erfüllt werden können und homogene Werkstoffe mit hellem Farbton erzielt werden. Dabei beträgt der Glasfaseranteil mindestens 26,0 Gew.-%.

Damit ergibt sich nur für eine spezielle Kombination der Komponenten B bis D als Flammschutzmittel-System ein vorteilhaftes Eigenschaftsprofil, das zu einem Bestehen sowohl der Bauteilprüfung als auch der UL94-Prüfung bei 0,4 mm und 0,8 mm für die Formmassen bzw. Bauteile (GWT) führt.

Im Ergebnis kann für Bauteile aus den erfindungsgemäßen thermoplastischen Formmassen der Glühdrahttest am tatsächlichen Bauteil ohne Entzündung bestanden werden, bei gleichzeitigem Erfüllen der UL94-Prüfung in allen Wandstärken. Zudem bleiben die guten mechanischen Eigenschaften der Formmassen bzw. der daraus hergestellten Formkörper erhalten.

Die Vorteile der Erfindung werden insbesondere bei Formmassen auf Basis von Polyamiden erreicht, die mindestens 26,0 Gew.-%, vorzugsweise mindestens 29,0 Gew.-%, insbesondere mindestens 30,0 Gew.-% Glasfasern enthalten.

Die einzelnen Komponenten der erfindungsgemäßen thermoplastischen Formmassen werden nachfolgend näher erläutert.

Die nachfolgend angegebenen Mengenanteile beziehen sich auf die Gesamtmenge der Komponenten A bis E, die 100,0 Gew.-% ergibt (unabhängig vom Vorliegen weiterer Komponenten, deren Menge ebenfalls auf die Gesamtmenge der Komponenten A bis E bezogen ist).

Die einzelnen genannten Untergrenzen und Obergrenzen für die einzelnen Komponenten können frei miteinander kombiniert werden. Die damit gebildeten Unterkombinationen sind mit Gegenstand der vorliegenden Erfindung.

Als Komponente A enthalten die thermoplastischen Formmassen 25,0 bis 64,5 Gew.-%, bevorzugt 26,5 bis 61,5 Gew.-%, vorzugsweise 25,0 bis 56,0 Gew.-%, insbesondere 41,0 bis 52,0 Gew.-%, mindestens eines thermoplastischen Polyamids.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96,0 gew.-%iger Schwefelsäure bei 25 °C gemäß ISO 307.

Halbkristalline oder amorphe Harze mit einem Molekulargewicht (Gewichtsmittelwert) von mindestens 5.000, wie sie z. B. in den amerikanischen Patentschriften 2,071,250, 2,071,251, 2,130,523, 2,130,948, 2,241,322, 2,312,966, 2,512,606 und 3,393,210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-amino-cyclohexyl)-methan, 2,2-Di-(4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95,0 Gew.-% an Caprolactam-Einheiten.

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch so genannte Direktpolymerisation in Anwesenheit von Wasser, wie beispielsweise in der DE-A 10313681, EP-A 1 198 491 und EP 9 220 65 beschrieben.

Außerdem seien auch noch Polyamide erwähnt, die z. B. durch Kondensation von 1,4-Diaminobutan mit Adipinsäure unter erhöhter Temperatur erhältlich sind (Polyamid 4,6). Herstellungsverfahren für Polyamide dieser Struktur sind z. B. in den EP-A 38 094, EP-A 38 582 und EP-A 039 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als geeignet erwiesen, deren Triamin-Gehalt bevorzugt weniger als 0,5 Gew.-%, vorzugsweise weniger als 0,3 Gew.-% beträgt (siehe EP-A 299 444 und EP-A 667 367).

Geeignete Copolyamide sind aufgebaut aus:
A1) 20,0 bis 90,0 Gew.-% Einheiten, die sich von Terephthalsäure und Hexamethylendiamin ableiten,
A2) 0 bis 50,0 Gew.-% Einheiten, die sich von ε-Caprolactam ableiten und
A3) 0 bis 80,0 Gew.-% Einheiten, die sich von Adipinsäure und Hexamethylendiamin ableiten,
A4) 0 bis 40,0 Gew.-% weiteren polyamidbildenden Monomeren, wobei der Anteil der Komponente (A2) oder (A3) oder (A4) oder deren Mischungen mindestens 10,0 Gew.-% beträgt.

Die Komponente A1) enthält 20,0 bis 90,0 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide gegebenenfalls Einheiten, die sich von ε-Caprolactam ableiten und/oder Einheiten, die sich von Adipinsäure und Hexamethylendiamin und/oder Einheiten, die sich von weiteren polyamidbildenden Monomeren ableiten.

Aromatische Dicarbonsäuren A4) weisen 8 bis 16 Kohlenstoffatome auf. Geeignete aromatische Dicarbonsäuren sind beispielsweise Isophthalsäure, substituierte Terephthal- und Isophthalsäure wie 3-t-Butylisophthalsäure, mehrkernige Dicarbonsäuren, z. B. 4,4'- und 3,3'-Diphenyldicarbonsäure, 4,4-'-und 3,3'-Diphenylmethandicarbonsäure, 4,4'- und 3,3'-Diphenylsulfondicarbonsäure, 1,4- oder 2,6-Naphthalindicarbonsäure, Phenoxyterephthalsäure, wobei Isophthalsäure besonders bevorzugt ist.

Weitere polyamidbildende Monomere A4) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan, 3,3'-Dimethyl-4,4'-diaminodicyclohexylmethan oder Metaxylylendiamin als Vertreter der Diamine und Capryllactam, Önanthlactam, ω-Aminoundecansäure und Laurinlactam als Vertreter von Lactamen bzw. Aminocarbonsäuren genannt.

Geeignete derartige Copolyamide sind in DE-A-10 2009 011 668 näher erläutert.

Die nachfolgende nicht abschließende Aufstellung enthält die genannten, sowie weitere Polyamide im Sinne der Erfindung und die enthaltenen Monomeren.
AB-Polymere:

| | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

AA/BB-Polymere:

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA6T | Hexamethylendiamin, Terephthalsäure |
| PA MXD6 | m-Xylylendiamin, Adipinsäure |

AA/BB-Polymere:

| | |
|---|---|
| PA6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 61 und PA 6T) |
| PAPACM 12 | Diaminodicyclohexylmethan, Laurinlactam |
| PA 6I/6T/PACMT | wie PA 6I/6T + Diami nodicyclohexylmethan, Terephthalsäure |
| PA 6T/6I/MACMT | wie PA 6I/6T + Dimethyldiaminocyclohexylmethan, Terephthalsäure |
| PA 6T/6I/MXDT | wie PA 6I/6T + m-Xylylendiamin, Terephthalsäure |
| PA 12/MACMI | Laurinlactam, Dimethyldiaminodicyclohexylrnethan, Isophthalsäure |
| PA 12/MACMT | Laurinlactam, Dimethyldiaminodicyclohexylmethan, Terephthalsäure |
| PA PDA-T | Phenylendiamin, Terephthalsäure |

Komponente A ist vorzugsweise ein Blend aus mindestens einem aliphatischen Polyamid und mindestens einem teilaromatischen oder aromatischen Polyamid.

Besonders bevorzugt werden erfindungsgemäß als Komponente A Mischungen eingesetzt, die Polyamid-6 und Polyamid-6.6 und gegebenenfalls zusätzlich Polyamid-6I/6T enthalten. Dabei wird bevorzugt mit einer Hauptmenge an Polyamid-6.6 gearbeitet. Die Menge an Polyamid-6 beträgt vorzugsweise 5,0 bis 50,0 Gew.-%, besonders bevorzugt 10,0 bis 30,0 Gew.-%, bezogen auf die Menge an Polyamid-6.6. Bei der Mitverwendung von Polyamid-6I/6T beträgt dessen Anteil vorzugsweise 10,0 bis 25,0 Gew.-%, besonders bevorzugt 0 bis 25,0 Gew.-%, bezogen auf die Menge an Polyamid-6.6.

Neben oder anstelle von Polyamid-6I/6T können auch Polyamid-6I oder Polyamid-6T oder Gemische davon eingesetzt werden.

Als Komponente B enthalten die thermoplastischen Formmassen bevorzugt 2,0 bis 8,0 Gew.-%, vorzugsweise 2,0 bis 6,0 Gew.-%, insbesondere 3,0 bis 5,0 Gew.-%, mindestens eines Phosphazens der allgemeinen Formeln (IX) oder (X).
Die Mindestmenge der Komponente B beträgt mindestens 2,0
Gew.-%, insbesondere 3,0 Gew.-%.

Die Höchstmenge der Komponente B beträgt 8,0 Gew.-%, vorzugsweise 6,0 Gew.-%, besonders bevorzugt 5,0 Gew.-%.

Unter Phosphazenen werden cyclische Phosphazene der allgemeinen Formel (IX) 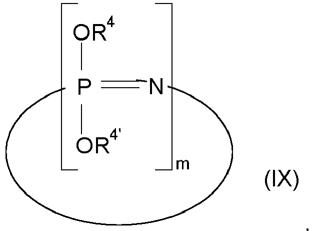 worin m eine ganze Zahl von 3 bis 25 ist und R⁴ und R^{4'} gleich oder verschieden sind und für C₁-C₂₀-Alkyl, C₆-C₃₀-Aryl, C₆-C₃₀-Arylalkyl oder C₆-C₃₀-Alkyl substituiertes Aryl stehen oder lineare Phosphazene der allgemeinen Formel (X) 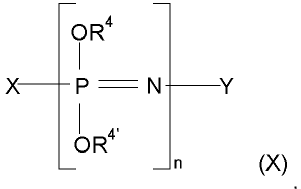 worin n für 3 bis 1000 und X für -N = P(OPh)₃ oder -N = P(O)OPh und Y für -P(OPh)₄ oder -P(O)(OPh)₂ steht, verstanden.

Die Herstellung derartiger Phosphazene ist in der EP-A 0 945 478 beschrieben.

Besonders bevorzugt sind cyclische Phenoxyphosphazene der Formel P₃N₃C₃₆ der Formel (XI) 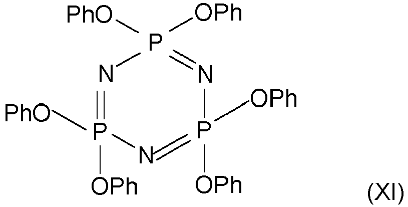 oder lineare Phenoxyphosphazene nach Formel (XII)

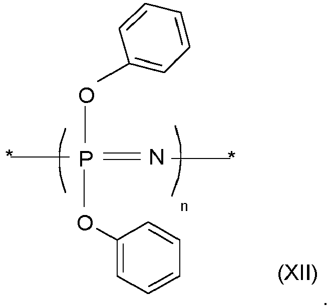

Die Phenylreste können gegebenenfalls substituiert sein. Phosphazene im Sinne der vorliegenden Anmeldung sind beschrieben in Mark, J. A., Allcock, H. R., West, R., "Inorganic Polymers", Prentice Hall International, 1992, Seiten 61 bis 141.

Als Komponente B werden bevorzugt cyclische Phenoxyphosphazene mit mindestens drei Phenoxyphosphazen-Einheiten eingesetzt. Entsprechende Phenoxyphosphazene sind beispielsweise in US 2010/0261818 in den Absätzen [0051] bis [0053] beschrieben. Es kann insbesondere auf die dortige Formel (I) verwiesen werden. Ferner sind entsprechende cyclische Phenoxyphosphazene in EP-A-2 100 919 beschrieben, dort insbesondere in den Absätzen [0034] bis [0038]. Die Herstellung kann erfolgen, wie in EP-A-2 100 919 in Absatz [0041] beschrieben. Gemäß einer Ausführungsform der Erfindung können die Phenylgruppen im cyclischen Phenoxyphosphazen durch C₁₋₄-Alkylreste substituiert sein. Bevorzugt handelt es sich um reine Phenylreste.

Für eine weitere Beschreibung der cyclischen Phosphazene kann auf Römpp Chemie-Lexikon, 9. Aufl., Stichwort "Phosphazene" verwiesen werden. Die Herstellung erfolgt beispielsweise über Cyclophosphazen, das aus PCl₅ und NH₄Cl erhältlich ist, wobei die Chlorgruppen im Cyclophosphazen durch Umsetzung mit Phenol durch Phenoxygruppen ersetzt sind.

Die cyclische Phenoxyphosphazen-Verbindung kann beispielsweise hergestellt werden wie in "Phosphorus-Nitrogen Compounds" (Academic Press, 1972), H. R. Allcock und "Inorganic Polymers" (Prentice Hall International, Inc., 1992), J. E. Mark, H. R. Allcock und R. West, beschrieben.

Vorzugsweise ist Komponente B ein Gemisch aus cyclischen Phenoxyphosphazenen mit drei und vier Phenoxyphosphazen-Einheiten. Dabei beträgt das Gewichtsverhältnis von drei Phenoxyphosphazen-Einheiten zu vier Phenoxyphosphazen-Einheiten enthaltenden Ringen vorzugsweise etwa 80:20. Größere Ringe der Phenoxyphosphazen-Einheiten können ebenfalls vorliegen, jedoch in geringen Mengen. Geeignete cyclische Phenoxyphosphazene sind von Fushimi Pharmaceutical Co., Ltd., unter der Bezeichnung Rabitle^{®} FP-100 erhältlich. Es handelt sich um einen mattweißen/gelblichen Feststoff mit einem Schmelzpunkt von 110 °C, einem Phosphorgehalt von 13,4 % und einem Stickstoffgehalt von 6,0 %. Der Anteil an drei Phenoxyphosphazen-Einheiten aufweisenden Ringen beträgt mindestens 80,0 Gew.-%.

Als Komponente C enthalten die thermoplastischen Formmassen bevorzugt 1,5 bis 6,0 Gew.-%, vorzugsweise 2,5 bis 5,5 Gew.-%, insbesondere 3,0 bis 5,0 Gew.-%, mindestens eines aliphatischen oder aromatischen Esters der Phosphorsäure oder Polyphosphorsäure.

Aus diesem Grund sind speziell feste, nicht migrierende Phosphatester mit einem Schmelzpunkt zwischen 70 und 150 °C bevorzugt. Dies hat zur Folge, dass die Produkte leicht zu dosieren sind und deutlich weniger Migration in der Formmasse aufweisen. Besonders bevorzugte Beispiele sind die kommerziell erhältlichen Phosphatester PX-200^{®} (CAS: 139189-30-3) der Firma Daihachi, oder Sol-DP^{®}der Firma ICL-IP. Weitere Phosphatester mit entsprechender Substitution der Phenylgruppen sind denkbar, wenn dadurch der bevorzugte Schmelzbereich erreicht werden kann. Die allgemeine Strukturformel, je nach Substitutionsmuster in Ortho- oder Parastellung am aromatischen Ring, sieht folgendermaßen aus: 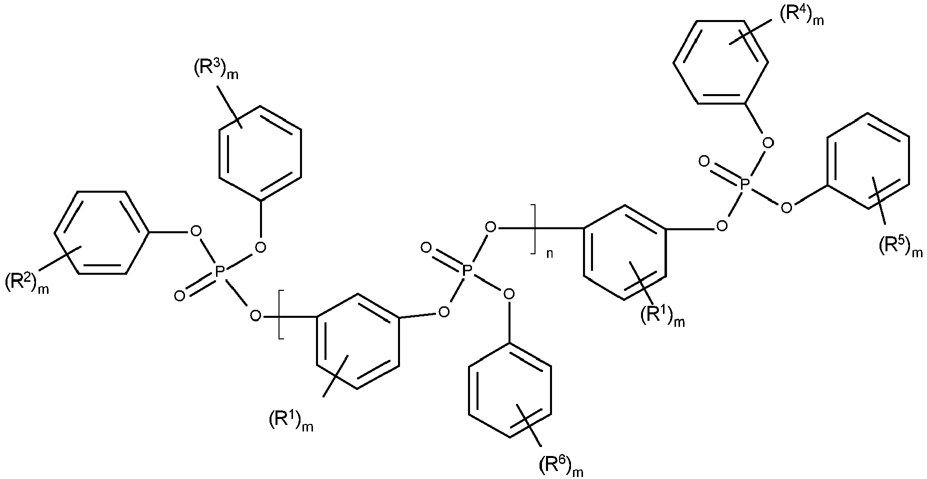 oder 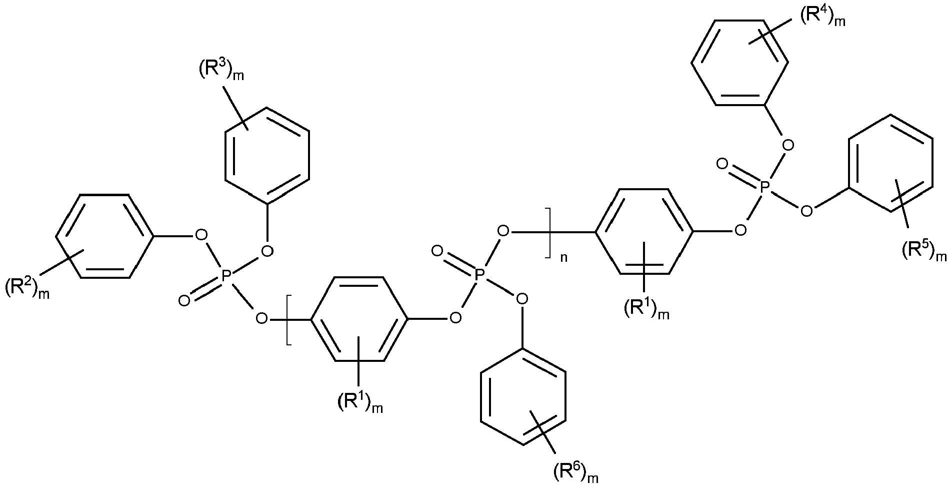 oder 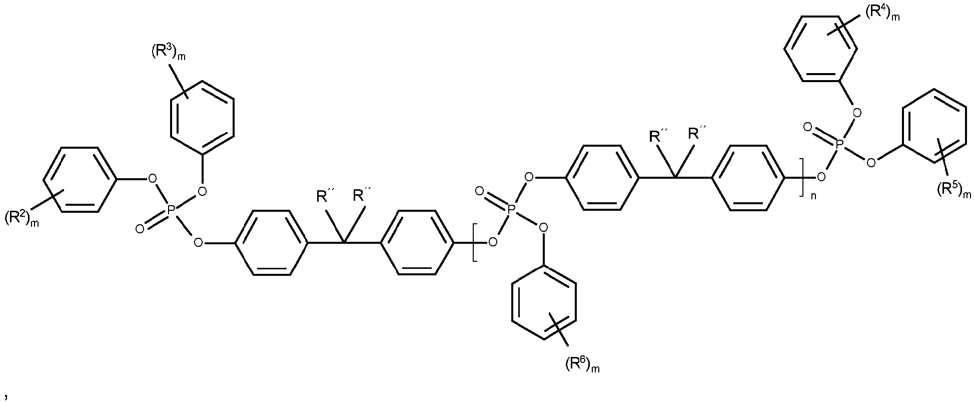 wobei
- R¹ =: H, Methyl, Ethyl oder Isopropyl ist, bevorzugt jedoch H.
- n =: Zwischen 0 und 7, bevorzugt jedoch 0.
- R²⁻⁶ =: H, Methyl, Ethyl oder Isopropyl, bevorzugt jedoch Methyl. R⁶ ist bevorzugt identisch zu R⁴ und R⁵.
- m =: Kann, müssen jedoch nicht gleich sein und zwischen 1, 2, 3, 4 und 5, bevorzugt jedoch 2.
- R" =: Kann H, Methyl, Ethyl oder Cyclopropyl sein, bevorzugt jedoch Methyl und H.

Als konkretes Beispiel sei PX-200 gezeigt:

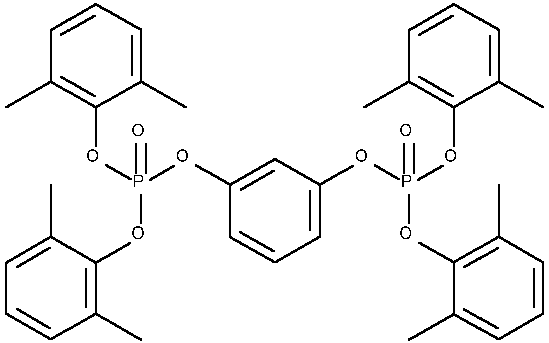

Besonders bevorzugt wird mindestens ein aromatischer Ester der Polyphosphorsäure eingesetzt. Derartige aromatische Polyphosphate sind beispielsweise unter der Bezeichnung PX-200 von Daihachi Chemical erhältlich.

Als Komponente D enthalten die erfindungsgemäßen thermoplastischen Formmassen 5,0 bis 30,0 Gew.-%, vorzugsweise 10,0 bis 25,0 Gew.-%, insbesondere 12,0 bis 20,0 Gew.-%, beispielsweise etwa 16,0 Gew.-% mindestens eines Metallphosphinats oder Phosphinsäuresalzes, die nachstehend beschrieben sind.

Die Mindestmenge der Komponente D beträgt 5,0 Gew.-%, vorzugsweise 10,0 Gew.-%, insbesondere 12,0 Gew.-%.

Die Höchstmenge der Komponente D beträgt 30,0 Gew.-%, vorzugsweise 25,0 Gew.-%, besonders bevorzugt 20,0 Gew.-%.

Beispiele bevorzugter Flammschutzmittel der Komponente D sind Metallphosphinate, die sich von hypophosphoriger Säure ableiten. Beispielsweise kann ein Metallsalz der hypophosphorigen Säure mit Mg, Ca, Al oder Zn als Metall eingesetzt werden. Besonders bevorzugt ist hier Aluminiumhypophosphit.

Es eignen sich auch Phosphinsäuresalze der Formel (I) oder/und Diphosphinsäuresalze der Formel (II) oder deren Polymere 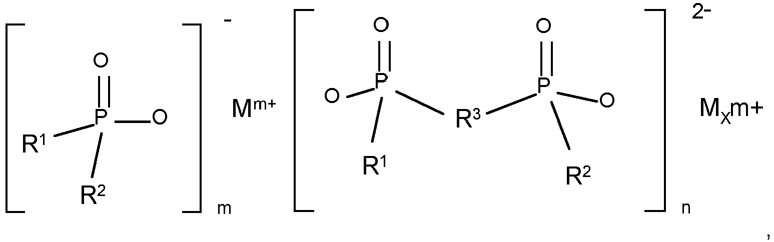 worin
- R¹, R²: gleich oder verschieden sind und Wasserstoff, C₁-C₆-Alkyl, linear oder verzweigt, und/oder Aryl bedeuten;
- R³: C₁-C₁₀-Alkylen, linear oder verzweigt, C₆-C₁₀-Arylen, -Alkylarylen oder -Arylalkylen;
- M: Mg, Ca, AI, Sb, Sn, Ge, Ti, Zn, Fe, Zr, Ce, Bi, Sr, Mn, Li, Na, K und/oder eine protonierte Stickstoffbase;
- m: 1 bis 4; n 1 bis 4; x 1 bis 4 bedeuten, vorzugsweise m = 3, x = 3.

Bevorzugt sind R¹, R² gleich oder verschieden und bedeuten Wasserstoff, Methyl, Ethyl, n-Propyl, Iso-Propyl, n-Butyl, tert.-Butyl, n-Pentyl und/oder Phenyl.

Bevorzugt bedeutet R³ Methylen, Ethylen, n-Propylen, Iso-Propylen, n-Butylen, tert.-Butylen, n-Pentylen, n-Octylen oder n-Dodecylen, Phenylen oder Naphthylen; Methyl-phenylen, Ethylphenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen.

Besonders bevorzugt ist R¹, R² Wasserstoff, Methyl, Ethyl und M = AI, wobei Al-hypophosphit besonders bevorzugt ist.

Die Herstellung der Phosphinate erfolgt vorzugsweise durch Ausfällen der entsprechenden Metallsalze aus wässrigen Lösungen. Die Phosphinate können jedoch auch in Gegenwart eines geeigneten anorganischen Metalloxids oder -sulfids als Trägermaterials (Weißpigmente, wie z. B. TiO₂, SnO₂, ZnO, ZnS, SiO₂) gefällt werden. Man erhält somit oberflächenmodifizierte Pigmente, die als lasermarkierbare Flammschutzmittel für thermoplastische Polyester verwendet werden können.

Bevorzugt werden Metallsalze substituierter Phosphinsäuren eingesetzt, in der gegenüber hypophosphoriger Säure ein oder zwei Wasserstoffatome durch Phenyl, Methyl, Ethyl, Propyl, IsoButyl, Iso-Octyl oder Reste R'-CH-OH mit R'-Wasserstoff, Phenyl, Toluyl, ersetzt sind. Dabei ist das Metall vorzugsweise Mg, Ca, AI, Zn, Ti, Fe. Besonders bevorzugt ist Aluminiumdiethylphosphinat (DEPAL).

Für eine Beschreibung von Phosphinsäuresalze oder Diphosphinsäuresalze kann auf DE-A 199 60 671 verwiesen werden, wie auch DE-A 44 30 932 und DE-A 199 33 901.

Als Komponente E enthalten die thermoplastischen Formmassen 26,0 bis 65,0 Gew.-%, vorzugsweise 29,0 bis 60,0 Gew.-%, insbesondere 30,0 bis 39,0 Gew.-% Glasfasern.

Hierbei kann es sich um übliche Glasfasern handelt, die als Endlosfasern oder Schnittglasfasern eingesetzt werden können. Sie können unbeschichtet oder beschichtet sein, beispielsweise mit einer Silanschlichte beschichtet.

Als Komponente F können 0 bis 10,0 Gew.-%, vorzugsweise 0 bis 5,0 Gew.-%, insbesondere 0 bis 3,0 Gew.-% weitere Hilfsstoffe mit verwendet werden. Die Menge bezieht sich auf die Gesamtmenge der Komponenten A bis E. Bei Mitverwendung weiterer Hilfsstoffe beträgt deren Mindestmenge vorzugsweise 0,5 Gew.-%, besonders bevorzugt mindestens 1,0 Gew.-%, insbesondere mindestens 1,5 Gew.-%. Bei den weiteren Hilfsstoffen kann es sich um weitere Zusatzstoffe oder Verarbeitungshilfsmittel handeln.

Geeignet sind beispielsweise mineralische Füllstoffe wie Talcum, Magnesiumhydroxid, Wollastonit-Nadeln, Schmiermittel wie Esterwachse und oxidierte Polyethylenwachse, Stabilisatoren wie Antioxidantien, Licht-Stabilisatoren, Phenole, Phosphite und Phosphonite oder Säurefänger, Nukleierungsmittel, Russe oder Pigmente wie Weißpigmente, beispielsweise TiO₂, ZnO, ZrO₂, SnO₂, ZnS.

Als Komponente F kommen auch weitere Flammschutzmittel in Betracht, beispielsweise halogenhaltige Flammschutzmittel.

Geeignete halogenhaltige Flammschutzmittel sind vorzugsweise bromierte Verbindungen, wie bromierte Diphenylether, bromierte Trimethylphenylindane (FR 1808 von DSB), Tetrabrombisphenol-A und Hexabromcyclododecan.

Geeignete Flammschutzmittel sind vorzugsweise bromierte Verbindungen, wie bromierte Oligocarbonate (BC 52 oder BC 58 der Firma Great Lakes) der Strukturformel:

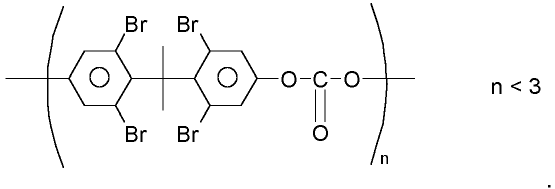

Insbesondere geeignet sind Polypentabrombenzylacrylate mit n > 4 (z. B. FR 1025 der Firma ICL-IP der Formel:

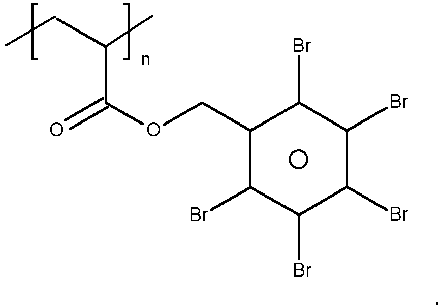

Bevorzugte bromierte Verbindungen sind weiterhin oligomere Umsetzungsprodukte (n > 3) aus Tetrabrom-bis-phenol-A mit Expoxiden (z. B. FR 2300 und 2400 der Firma DSB) der Formel:

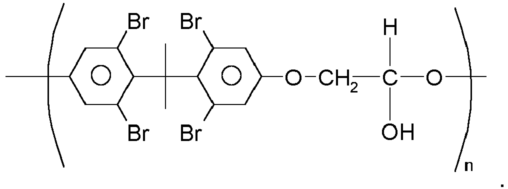

Die als Flammschutzmittel vorzugsweise eingesetzten bromierten Oligostyrole haben einen mittleren Polymerisationsgrad (Zahlenmittel) zwischen 3 und 90, vorzugsweise zwischen 5 und 60, gemessen dampfdruckosmometrisch in Toluol. Zyklische Oligomere sind ebenfalls geeignet. Gemäß einer bevorzugten Ausführungsform der Erfindung weisen die einzusetzenden bromierten oligomeren Styrole die nachstehende Formel I auf, in der R Wasserstoff oder ein aliphatischer Rest, insbesondere ein Alkylrest wie z. B. CH₂ oder C₂H₅ und n die Anzahl der sich wiederholenden Kettenbausteine bedeuten. R¹ kann sowohl H als auch Brom als auch ein Fragment eines üblichen Radikalbildners sein:

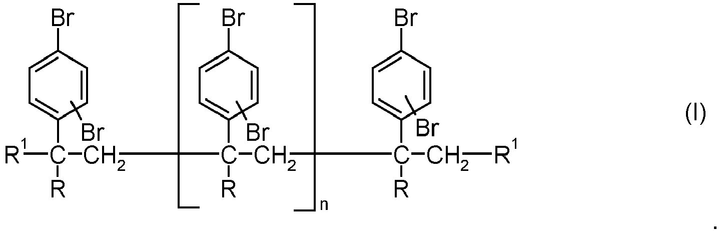

Der Wert n kann 1 bis 88, vorzugsweise 3 bis 58, betragen. Die bromierten Oligostyrole enthalten 40,0 bis 80,0 Gew.-%, vorzugsweise 55,0 bis 70,0 Gew.-% Brom. Bevorzugt ist ein Produkt, das überwiegend aus Polydibromstyrol besteht. Die Substanzen sind unzersetzt schmelzbar und z. B. in Tetrahydrofuran löslich. Sie können hergestellt werden entweder durch Kernbromierung von - gegebenenfalls aliphatisch hydrierten - Styrololigomeren, wie sie z. B. durch thermische Polymerisation von Styrol erhalten werden (nach DT-OS 25 37 385) oder durch radikalische Oligomerisierung von geeigneten bromierten Styrolen. Die Herstellung des Flammschutzmittels kann auch durch ionische Oligomerisation von Styrol und anschließende Bromierung erfolgen. Die zur Flammfestausrüstung der Polyamide notwendige Menge an bromiertem Oligostyrol hängt vom Bromgehalt ab. Der Bromgehalt in den erfindungsgemäßen Formmassen beträgt von 2,0 bis 30,0 Gew.-%, vorzugsweise von 5,0 bis 12,0 Gew.-%.

Die bromierten Polystyrole gemäß der Erfindung werden üblicherweise nach dem in der EP-A 047 549 beschriebenen Verfahren erhalten:

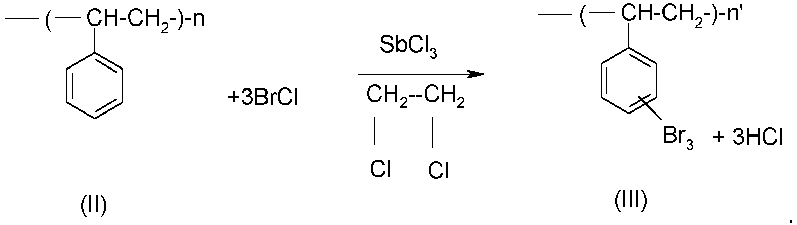

Die nach diesem Verfahren und im Handel erhältlichen bromierten Polystyrole sind vorwiegend kernsubstituierte tribromierte Produkte. n' (s. III) hat allgemein Werte von 125 bis 1500, was einem Molekulargewicht von 42500 bis 235000, vorzugsweise von 130000 bis 135000, entspricht.

Der Bromgehalt (bezogen auf den Gehalt an kernsubstituiertem Brom) beträgt im Allgemeinen mindestens 50,0 Gew.-%, vorzugsweise mindestens 60,0 Gew.-% und insbesondere 65,0 Gew.-%.

Die im Handel erhältlichen pulverförmigen Produkte weisen im Allgemeinen eine Glastemperatur von 160 bis 200 °C auf und sind beispielsweise unter den Bezeichnungen HP 7010 der Firma Albemarle und Pyrocheck PB 68 der Firma Ferro Corporation erhältlich.

Es können auch Mischungen der bromierten Oligostyrole mit bromierten Polystyrolen in den erfindungsgemäßen Formmassen eingesetzt werden, wobei das Mischungsverhältnis beliebig ist.

Weiterhin sind chlorhaltige Flammschutzmittel geeignet, wobei Declorane plus der Firma Oxychem bevorzugt ist.

Geeignete halogenhaltige Flammschutzmittel sind bevorzugt kernbromiertes Polystyrol, bromierte Polybenzylacrylate, bromierte Bisphenol-A-Epoxid-Oligomere oder bromierte Bisphenol-A-Polycarbonate.

Gemäß einer Ausführungsform der Erfindung werden keine halogenhaltigen Flammschutzmittel in den erfindungsgemäßen thermoplastischen Formmassen eingesetzt.

Eine als Komponente F geeignete flammhemmende Melaminverbindung im Sinne der vorliegenden Erfindung ist eine Melaminverbindung, die beim Zusatz zu Glasfaser-gefüllten Polyamid-Formmassen die Entflammbarkeit vermindert und das Brandverhalten in flammhemmender Weise beeinflusst, so dass verbesserte Eigenschaften bei den UL94-Tests und beim Glühdrahttest resultieren.

Die Melaminverbindung ist beispielsweise ausgewählt aus Melaminborat, Melaminphosphat, Melaminsulfat, Melaminpyrophosphat, Melam, Melem, Melon oder Melamincyanurat oder Gemischen davon.

Das gemäß der Erfindung bevorzugt geeignete Melamincyanurat ist ein Reaktionsprodukt aus vorzugsweise äquimolaren Mengen von Melamin (Formel I) und Cyanursäure bzw. Isocyanursäure (Formeln la und Ib)

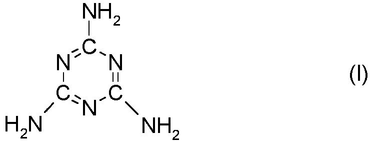

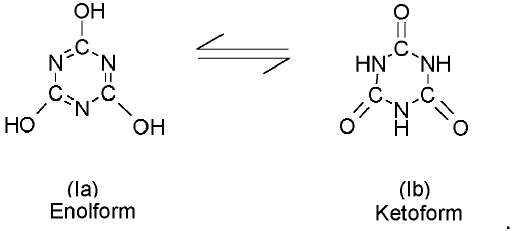

Man erhält es z. B. durch Umsetzung von wässrigen Lösungen der Ausgangsverbindungen bei 90 bis 100 °C. Das im Handel erhältliche Produkt ist ein weißes Pulver mit einer mittleren Korngröße d₅₀ von 1,5 bis 7 µm und einem d₉₉ Wert kleiner 50 µm.

Weitere geeignete Verbindungen (oft auch als Salze oder Addukte bezeichnet) sind Melaminsulfat, Melamin, Melaminborat, -oxalat, -phosphat prim., -phosphat sec. und -pyrophosphat sec., Neopentylglycolborsäuremelamin. Erfindungsgemäß sind die Formmassen vorzugsweise frei von polymerem Melaminphosphat (CAS-Nr. 56386-64-2 bzw. 218768-84-4).

Hierunter verstanden sind Melaminpolyphosphatsalze einer 1,3,5-Triazinverbindung, deren Zahl n des durchschnittlichen Kondensationsgrades zwischen 20 und 200 liegt und der 1,3,5-Triazingehalt 1,1 bis 2,0 mol einer 1,3,5-Triazinverbindung, ausgewählt aus der Gruppe, bestehend aus Melamin, Melam, Melem, Melon, Ammelin, Ammelid, 2-Ureidomelamin, Acetoguanamin, Benzoguanamin und Diaminphenyltriazin, pro Mol Phosphoratom beträgt. Bevorzugt beträgt der n-Wert solcher Salze im Allgemeinen zwischen 40 und 150 und das Verhältnis einer 1,3,5-Triazinverbindung pro Mol Phosphoratom vorzugsweise zwischen 1,2 und 1,8. Des Weiteren wird der pH einer 10 gew.-%igen wässrigen Aufschlämmung von Salzen, hergestellt gemäß EP-B1 095 030 im Allgemeinen mehr als 4,5 und vorzugsweise mindestens 5,0, betragen. Der pH-Wert wird üblicherweise bestimmt, indem 25 g des Salzes und 225 g sauberes Wasser von 25 °C in einen 300-ml-Becher gegeben werden, die resultierende wässrige Aufschlammung für 30 Minuten gerührt und dann der pH gemessen wird. Der oben genannte n-Wert, der zahlenmittlere Kondensationsgrad, kann mittels 31P-Feststoff-NMR bestimmt werden. Aus J. R. van Wazer, C. F. Callis, J. Shoolery und R. Jones, J. Am. Chem. Soc., 78, 5715, 1956, ist bekannt, dass die Anzahl benachbarter Phosphatgruppen eine einzigartige, chemische Verschiebung angibt, die die klare Unterscheidung zwischen Orthophosphaten, Pyrophosphaten und Polyphosphaten ermöglicht.

Geeignete Guanidinsalze sind

| | CAS-Nr. |
|---|---|
| G-carbonat | 593-85-1 |
| G-cyanurat prim. | 70285-19-7 |
| G-phosphat prim. | 5423-22-3 |
| G-phosphat sec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| sowie Harnstoffphosphat grün | 4861-19-2 |
| Harnstoffcyanurat | 57517-11-0 |
| Ammelin | 645-92-1 |
| Ammelid | 645-93-2 |
| Melem | 1502-47-2 |
| Melon | 32518-77-7 |

Unter Verbindungen im Sinne der vorliegenden Erfindung sollen sowohl z. B. Benzoguanamin selbst und dessen Addukte bzw. Salze als auch die am Stickstoff substituierten Derivate und dessen Addukte bzw. Salze verstanden werden.

Weiterhin geeignet sind Ammoniumpolyphosphat (NH₄PO₃)ₙ mit n ca. 200 bis 1000, bevorzugt 600 bis 800, und Tris(hydroxyethyl)isocyanurat (THEIC) der Formel IV 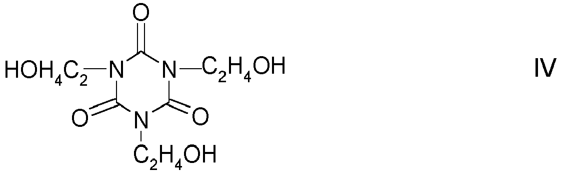 oder dessen Umsetzungsprodukte mit aromatischen Carbonsäuren Ar(COOH)ₘ, welche gegebenenfalls in Mischung miteinander vorliegen können, wobei Ar ein ein-, zwei- oder dreikerniges aromatisches Sechsringsystem bedeutet und m 2, 3 oder 4 ist.

Geeignete Carbonsäuren sind beispielsweise Phthalsäure, Isophthalsäure, Terephthalsäure, 1,3,5-Benzoltricarbonsäure, 1,2,4-Benzoltricarbonsäure, Pyromellithsäure, Mellophansäure, Prehnitsäure, 1-Naphthoesäure, 2-Naphthoesäure, Naphthalindicarbonsäuren und Anthracencarbonsäuren.

Die Herstellung erfolgt durch Umsetzung des Tris(hydroxyethyl)isocyanurats mit den Säuren, ihren Alkylestern oder ihren Halogeniden gemäß den Verfahren der EP-A 584 567.

Derartige Umsetzungsprodukte stellen ein Gemisch von monomeren und oligomeren Estern dar, welche auch vernetzt sein können. Der Oligomerisierungsgrad beträgt üblicherweise 2 bis ca. 100, vorzugsweise 2 bis 20. Bevorzugt werden Mischungen von THEIC und/oder dessen Umsetzungsprodukte mit phosphorhaltigen Stickstoffverbindungen, insbesondere (NH₄PO₃)ₙ oder Melaminpyrophosphat oder polymeres Melaminphosphat eingesetzt. Das Mischungsverhältnis z.B. von (NH₄PO₃)ₙ zu THEIC beträgt vorzugsweise 90,0 bis 50,0 zu 10,0 bis 50,0, insbesondere 80,0 bis 50,0 zu 50,0 bis 20,0 Gew.-%, bezogen auf die Mischung derartiger Komponenten B1).

Weiterhin geeignet sind Benzoguanamin-Verbindungen der Formel V 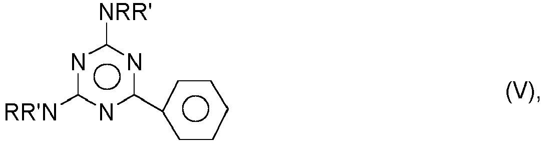 in der R,R' geradkettige oder verzweigte Alkylreste mit 1 bis 10 C-Atomen, bevorzugt Wasserstoff, bedeutet, und insbesondere deren Addukte mit Phosphorsäure, Borsäure und/oder Pyrophosphorsäure.

Bevorzugt sind ferner Allantoin-Verbindungen der Formel VI 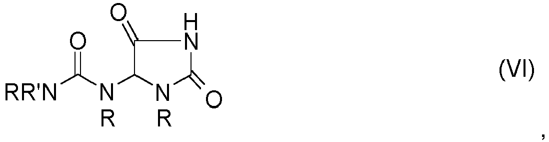 wobei R,R' die in Formel V angegebene Bedeutung haben, sowie deren Salze mit Phosphorsäure, Borsäure und/oder Pyrophosphorsäure sowie Glycolurile der Formel VII oder dessen Salze mit den o. g. Säuren

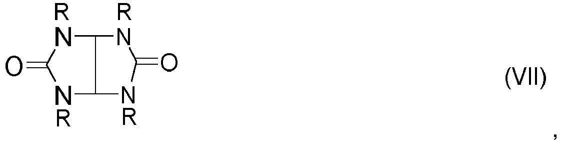

in der R die in Formel V genannte Bedeutung hat.

Geeignete Produkte sind im Handel oder gemäß DE-A 196 14 424 erhältlich.

Das gemäß der Erfindung verwendbare Cyanguanidin (Formel VIII) erhält man z. B. durch Umsetzung von Kalkstickstoff (Calciumcyanamid) mit Kohlensäure, wobei das entstehende Cyanamid bei pH 9 bis 10 zu Cyanguanidin dimerisiert.

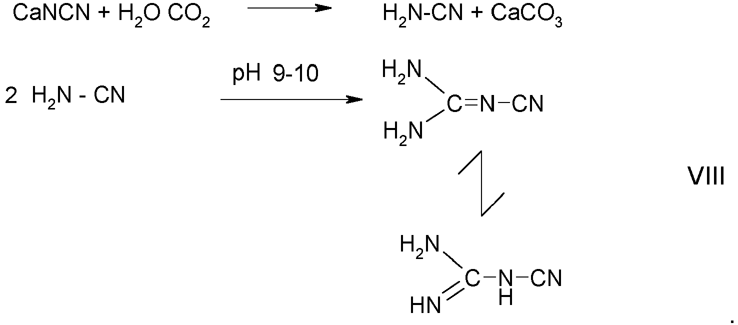

Das im Handel erhältliche Produkt ist ein weißes Pulver mit einem Schmelzpunkt von 209 °C bis 211 °C.

Besonders bevorzugt wird Melamincyanurat (beispielsweise Melapur^{®} MC25 der BASF SE) eingesetzt.

Ferner können separate Metalloxide wie Antimontrioxid, Antimonpentoxid, Natriumantimonat und ähnliche Metalloxide eingesetzt werden. Bevorzugt wird auf den Einsatz derartiger Metalloxide jedoch verzichtet, da sie bereits in Komponente B vorliegen. Für eine Beschreibung von Pentabrombenzylacrylat und Antimontrioxid oder Antimonpentoxid kann auf EP-A 0 624 626 verwiesen werden.

Weiterhin kann Phosphor, beispielsweise roter Phosphor, als Komponente C eingesetzt werden. Dabei kann roter Phosphor beispielsweise in Form eines Masterbatches eingesetzt werden.

Ferner kommen Dicarbonsäuresalze der Formel 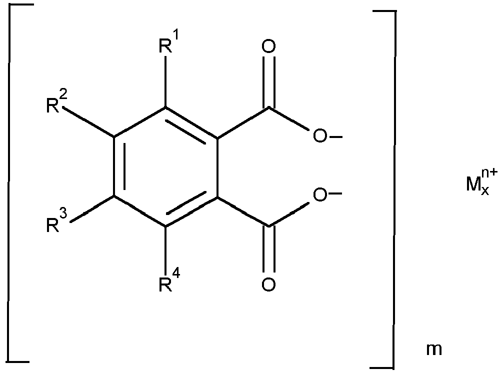
in Betracht, wobei
R¹ bis R⁴ unabhängig voneinander Halogen oder Wasserstoff bedeuten, mit der Maßgabe, dass mindestens ein Rest R¹ bis R⁴ Halogen bedeutet,
x = 1 bis 3, vorzugsweise 1, 2
m = 1 bis 9, vorzugsweise 1 bis 3, 6, 9, insbesondere 1 bis 3
n = 2 bis 3
M = Erdalkali, Ni, Ce, Fe, In, Ga, AI, Pb, Y, Zn, Hg.

Bevorzugte Dicarbonsäuresalze enthalten als Reste R¹ bis R⁴ unabhängig voneinander CI oder Brom oder Wasserstoff, insbesondere bevorzugt alle Reste R¹ bis R⁴ CI oder/und Br.

Als Metalle M sind Be, Mg, Ca, Sr, Ba, AI, Zn, Fe bevorzugt.

Derartige Dicarbonsäuresalze sind im Handel erhältlich oder herstellbar gemäß den Verfahren beschrieben in der US 3,354,191.

Vorzugsweise wird nicht mit zusätzlichen separaten Metalloxiden und auch nicht zusätzlich mit Phosphor oder Dicarbonsäuresalzen gearbeitet.

Als Komponente F können zudem funktionelle Polymere eingesetzt werden. Hierbei kann es sich beispielsweise um flammhemmende Polymere handeln. Derartige Polymere sind beispielsweise in US 8,314,202 beschrieben und weisen 1,2-bis[4-(2-Hydroxyethoxy)phenyl]-ethanon-Wiederholeinheiten auf. Ein weiteres geeignetes funktionelles Polymer zur Erhöhung der Kohle-Rückstandsmenge ist Poly(2,6-dimethyl-1,4-phenylenoxid) (PPPO).

Vorzugsweise wird nur mit den flammhemmenden Komponenten B, C und D gearbeitet.

Bei Komponente F kann es sich auch um kautschukelastische Polymerisate (oft auch als Schlagzäh-Modifier, Elastomere oder Kautschuke bezeichnet) handeln.

Ganz allgemein handelt es sich dabei um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z. B. in Houben-Weyl, Methoden der organischen Chemie, Bd. 14/1 (Georg-Thieme-Verlag, Stuttgart, 1961), Seiten 392 bis 406, und in der Monographie von C.B. Bucknall, "Toughened Plastics" (Applied Science Publishers, London, 1977) beschrieben.

Im Folgenden werden einige bevorzugte Arten solcher Elastomere vorgestellt.

Bevorzugte Arten von Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen / 100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50,0, insbesondere 1,0 bis 8,0 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z. B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z. B. Ester und Anhydride, und/oder Epoxygruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut.

R¹C(COOR²)=C(COOR³)R⁴ (I)

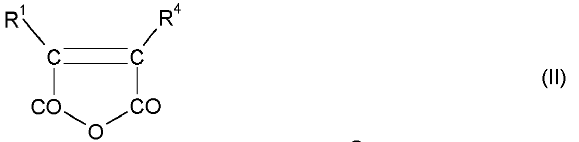

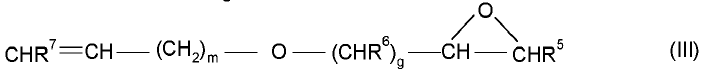

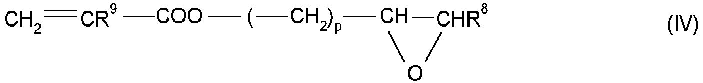

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20,0 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50,0 bis 98,0: insbesondere 55,0 bis 95,0 Gew.-% Ethylen,
- 0,1 bis 40,0: insbesondere 0,3 bis 20,0 Gew.-% Glycidylacrylat und/oder Glycidylmethacrylat, (Meth)acrylsäure und/oder Maleinsäureanhydrid, und
- 1,0 bis 45,0: insbesondere 10,0 bis 40,0 Gew.-% n-Butylacrylat und/oder 2-Ethylhexylacrylat.

Weitere bevorzugte Ester der Acryl- und/oder Methacrylsäure sind die Methyl-, Ethyl-, Propylund i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z. B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabe-Reihenfolge der einzelnen Monomeren bestimmt; auch die Morphologie der Polymeren wird von dieser Zugabe-Reihenfolge beeinflusst.

Nur stellvertretend seien hier als Monomere für die Herstellung des Kautschukteils der Elastomeren Acrylate wie z. B. n-Butylacrylat und 2-Ethylhexylacrylat, entsprechende Methacrylate, Butadien und Isopren sowie deren Mischungen genannt. Diese Monomeren können mit weiteren Monomeren wie z. B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im Allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z. B. Epoxy-, Carboxyl-, latente Carboxyl-, Amino- oder Amidgruppen sowie funktionelle Gruppen, die durch Mitverwendung von Monomeren der allgemeinen Formel 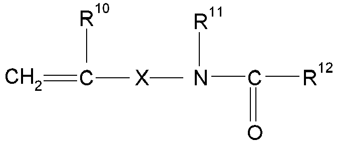
eingeführt werden können,
wobei die Substituenten folgende Bedeutung haben können:
   - R¹⁰: Wasserstoff oder eine C₁- bis C₄-Alkylgruppe,
   - R¹¹: Wasserstoff, eine C₁- bis C₈-Alkylgruppe oder eine Arylgruppe, insbesondere Phenyl,
   - R¹²: Wasserstoff, eine C₁- bis C₁₀-Alkyl-, eine C₆- bis C₁₂-Arylgruppe oder -OR¹³
   - R¹³: eine C₁- bis C₈-Alkyl- oder C₆- bis C₁₂-Arylgruppe, die gegebenenfalls mit O- oder N-haltigen Gruppen substituiert sein können,
   - X: eine chemische Bindung, eine C₁- bis C₁₀-Alkylen- oder C₆-C₁₂-Arylengruppe oder 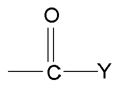
   - Y: O-Z oder NH-Z und
   - Z eine: C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethyl-amino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 502 65 beschriebenen Verbindungen.

Ferner können auch so genannte pfropfvernetzende Monomere (graft-linking monomers) verwendet werden, d. h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z. B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d. h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4,148,846 verwiesen.

Im Allgemeinen beträgt der Anteil dieser vernetzenden Monomeren an dem schlagzäh modifizierenden Polymer bis zu 5,0 Gew.-%, vorzugsweise nicht mehr als 3,0 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methyl-acrylat, Buta-1,3-dien, Isopren, Ethylhexylacrylat |
| IV | wie I oder II | wie I oder III, aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40,0 Gew.-%, werden vorzugsweise zur Schlagzähmodifizierung von PBT, gegebenenfalls in Mischung mit bis zu 40,0 Gew.-% Polyethylenterephthalat eingesetzt. Entsprechende Blend-Produkte sind unter dem Warenzeichen Ultradur^{®}S (ehemals Ultrablend^{®}S der BASF AG) erhältlich.

Anstelle von Pfropfpolymerisaten mit einem mehrschaligen Aufbau können auch homogene, d. h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z. B. durch Suspensionspolymerisation, hergestellt werden.

Silicon-Kautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Die Herstellung der erfindungsgemäßen thermoplastischen Formmassen wie auch der Mischung zur flammhemmenden Ausrüstung erfolgt durch Vermischen der Inhaltsstoffe.

Die thermoplastischen Formmassen werden zur Herstellung von Formkörpern, Fasern oder Folien verwendet und werden durch Aufschmelzen, Extrudieren und nachfolgende Formgebung der thermoplastischen Formmasse hergestellt. Formkörper sind bevorzugt (elektrische) Schalter, Stecker, Steckverbinder und Gehäuse für Elektronik- oder Elektrikbauteile.

Die erfindungsgemäßen thermoplastischen Formmassen können nach bekannten Verfahren hergestellt werden, indem man die Ausgangskomponenten in üblichen Mischvorrichtungen mischt und anschließend extrudiert. Geeignete Verarbeitungsmaschinen sind in: Handbuch der Kunststoffextrusion, Vol. 1 Grundlagen, Herausgeber F. Hensen, W. Knappe, H. Potente, 1989, Seiten 3 bis 7 (ISBN 3-446-14339-4) und in Vol. 2 Extrusionsanlagen, 1986 (ISBN 3-446-14329-7) beschrieben. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt - auch als Konzentrate in einem Trägerpolymer (Masterbatch) - hinzugegeben werden. Die Mischtemperaturen liegen in der Regel im Bereich von 230 bis 320 °C.

Die Erfindung wird durch die nachstehenden Beispiele näher erläutert.

### Beispiele

### Einsatzstoffe:

| | | |
|---|---|---|
| A | PA66 | VZ 120 cm³/g, Ultramid^{®}A24, BASF SE |
| | Polyamid 6 | VZ 150 cm³/g, Ultramid^{®}B27, BASF SE |
| | PA6I/6T | Selar^{®} A 3426, DuPont |
| B | Cyclophosphazen | Rabitle^{®} FP 110, Fushimi Co. |
| C | aromatisches Polyphosphat | PX-200, Daihachi Chemical |
| D | Diethylphosphinat Salz des Aluminium (DEPAL) | z. B. Exolit^{®} OP 1230, Clariant AG |
| E | Glasfaser | OCF DS 1110 |
| F | Melaminpoly(aluminiumphosphat) | Satire^{®} 400 |
| | Melaminpolyphosphat (MPP) | Melapur^{®} M200, BASF Schweiz (nur in Vergleichsbeispielen) |

### Verarbeitung:

Die einzelnen Komponenten wurden in einem Zweiwellenextruder (ZSK 25) bei einem Durchsatz von ca. 20 kg/h und ca. 280 °C (PA66) bei flachem Temperaturprofil gemischt, als Strang ausgetragen, bis zur Granulierfähigkeit abgekühlt und granuliert. Die Prüfkörper für die in den Tabellen aufgeführten Untersuchungen wurden auf einer Spritzgießmaschine des Typs Arburg 420 bei einer Massetemperatur von ca. 260 bis 280 °C und einer Werkzeugtemperatur von ca. 80 °C verspritzt.

Die Zusammensetzungen der Formmassen und die Ergebnisse der Messungen sind den Tabellen zu entnehmen.

### Prüfung:

Die mechanischen Eigenschaften wurden gemäß ISO 527-2/1A/5 und die Charpy Schlagzähigkeit (ungekerbt) gemäß ISO 179-2/1eU bestimmt.

Die Flammwidrigkeit der Formmassen wurde zum einen nach der Methode UL94-V (Underwriters Laboratories Inc. Standard of Safety, "Test for Flammability of Plastic Materials for Parts in Devices and Appliances", Northbrook 1998, Seite 14 bis Seite 18) bestimmt.

### Glühdrahtprüfung:

Glühdrahtprüfungen wurden gemäß DIN EN 60695-2-11 / -12 / -13 (im März 2017 gültige Fassung) durchgeführt. Als Kriterium für die in den Beispielen aufgeführte Prüfung am Bauteil, hier ein Stecker, wurde, gemäß IEC 60335-1, beobachtet, ob eine Flammenbildung für einen Zeitraum von >2 s ersichtlich ist. Die in den Beispielen aufgeführte Temperatur ist die maximale Glühdrahttemperatur, bei der keine Flammenbildung auftrat.

Als Bauteil wurde in den Beispielen exemplarisch ein Stecker verwendet, der als typisch für die relevante Produktklasse angesehen werden kann. Der Stecker verfügt über Sektionen unterschiedlicher Wandstärke (0.8 mm an dünnen Stellen, 2 mm an dicken Stellen und hat äußere Abmessungen von 23 mm × 10 mm × 17 mm. Die Stecker wurden mit erfindungsgemäßen Formmassen hergestellt und weisen keine dunklen Flecken auf.

### TGA:

Die thermogravimetrische Analyse wurde mit dem Gerät Q5000IR der Firma TA Instruments durchgeführt. Die Probenmasse betrug 2 mg bis 3 mg. Die Einwaage erfolgte in Aluminiumtiegeln und das Material wurde unter Stickstofffluss mit konstanter Heizrate von 20 °C min⁻¹ von 40 °C auf 600 °C erhitzt.

### Beispiele I

| | 1 | 2 | 3 | V1 | V2 | V3 | V4 | V5 | V6 | V7 | V8 |
|---|---|---|---|---|---|---|---|---|---|---|---|
| Ultramid A24 | 44 | 39 | 32 | 33.5 | 45 | 37 | 35 | 36 | 43 | 35,6 | 45 |
| Selar PA 3426 | 8 | 13 | 7 | 7.0 | 0 | 7 | 15 | 7 | 8 | 7,1 | 8 |
| Ultramid B22 | 0 | 0 | 5 | 4.5 | 0 | 5.0 | 0 | 5 | 0 | 4,7 | 0 |
| Glasfaser DS 1110 | 30 | 30 | 30 | 30 | 30 | 30 | 25 | 30 | 30 | 30 | 30 |
| Melapur 200 | 0 | 0 | 0 | 3 | 3 | 0 | 16.7 | 0 | 3 | 3 | 0 |
| Safire 400 | 0 | 0 | 0 | 0 | 0 | 3 | 0 | 0 | 0 | 0 | 0 |
| Rabitle FP-110 | 3 | 3 | 5 | 6 | 6 | 5 | 8.3 | 6 | 0 | 3.6 | 0 |
| Exolit OP 1230 | 12 | 12 | 13 | 16 | 16 | 13 | 0 | 16 | 16 | 16 | 12 |
| PX-200 | 3 | 3 | 5 | 0 | 0 | 0 | 0 | 0 | 0 | 0 | 5 |
| E-Modul (MPa) | 9900 | 10050 | 9300 | 9950 | 9600 | 10500 | 9400 | 9900 | 8800 | 10300 | 10500 |
| Bruchdehnung (%) | 3.0 | 3.2 | 2.2 | 3,0 | 2.6 | 2.7 | 2.7 | 2.7 | 2.7 | 3,3 | 3.0 |
| Charpy aCU (kJ/m²) | 75 | 75 | 32 | 66 | 51 | 37 | 53 | 64 | 66 | 72 | 78 |
| GWT Prüfung am Stecker. Max. Temperatur (°C) ohne Entzündung | 750 | 750 | 775 | 750 | 750 | 750 | 750 | 725 | 725 | 725 | 725 |
| GWIT Platte 2 mm | - | - | - | 800 | - | - | 875 | - | - | - | |
| UL94 0,8 mm | V0 | V0 | V0 | V0 | V0 | V0 | V2 | V0 | V0 | V0 | V0 |
| UL94 0,4 mm | V0 | V0 | V0 | V0 | V0 | V0 | - | V0 | V0 | V0 | V1 |
| Visuelles Erscheinungsbild | Hell, homogen | Hell, homogen | Hell, homogen | Schwarze Flecken | Schwarze Flecken | Schwarze Punkte | Hell, homogen | Hell, wenige Flecken | Schwarze Flecken | Schwarze Flecken | Hell, homogen |

| | | | | | | | | | | | |
|---|---|---|---|---|---|---|---|---|---|---|---|
| - keine Werte vorhanden | | | | | | | | | | | |

Wie in den Beispielen gezeigt, kann mit einer Kombination von Phosphinaten, Cyclophosphazen und Melaminpolyphosphat (MPP) sowohl die Glühdrahtprüfung an der Platte und am Bauteil, als auch der UL94-Test bei 0,4 mm Wandstärke bestanden werden (Vergleichsbeispiele V1, V2). Allerdings weisen die Proben schwarze flächige Einfärbung und auch schwarze Punkte auf. Die dunklen Einfärbungen weisen auf eine Unverträglich des Cyclophosphazens mit Melaminpolyphosphaten hin. Durch Substitution von reinem MPP mit einem modifizierten Melaminpolyphosphat kann keine nennenswerte Verbesserung erzielt werden (Vergleichsbeispiel V3). Plättchen (60 mm × 60 mm × 2 mm) nach Herstellung durch Spritzguss einer erfindungsgemäßen Formmasse (1) und einer nicht erfindungsgemäßen Formmasse (V3) zeigen in exemplarischer Darstellung eine gleichmäßig helle Oberfläche für Formmasse (1) und graue Schlieren und eine grauere Einfärbung für Formmasse (V3). Formmassen mit einer großen Menge an MPP und Cyclophosphazen können einen sehr guten Widerstand gegen den Glühdraht erzielen (Vergleichsbeispiel V4) und die Wirkung von MPP als heller Füllstoff führt zu einer ansprechenden Oberfläche des Materials. Allerdings kann die vertikale UL94-Prüfung mit solchen Proben selbst bei 0,8 mm Wandstärke nicht bestanden werden.

In Formulierungen mit Cyclophosphazen, ohne Zugabe von MPP, kann wiederum die Glühdrahtprüfung nicht bei 750 °C bestanden werden (Vergleichsbeispiel V5). Ebenso kann führt die Zugabe von MPP ohne Cyclophosphazen nicht zum Bestehen der Glühdrahtprüfung bei 750 °C (Vergleichsbeispiel V6). Durch eine verringerte Zugabe der Kombination von MPP und Cyclophosphazen kann ebenfalls die Glühdrahtprüfung nicht bei 750 °C bestanden werden (Vergleichsbeispiel V7) und die dunkle Einfärbung ist weiterhin vorhanden.

Erfindungsgemäß werden alle Anforderung der Glühdraht- und UL94-Prüfung durch Kombinationen von Cyclophosphazen, Phosphinat und einem Phosphatester erfüllt (Beispiele 1 bis 3). Die Proben weisen eine homogene Oberfläche ohne Einfärbungen auf. Wird der Phosphatester ohne Zugabe des Cyclophosphazens verwendet, weisen die Formmassen einen zu geringen Widerstand gegen den Glühdraht auf und können nur eine UL94 V1 Klassifizierung bei 0,4 mm Wandstärke erzielen (Vergleichsbeispiel V8). Insbesondere die erfindungsgemäßen Formmassen 1 und 2 weisen neben der guten Flammwidrigkeit auch eine sehr gute Schlagzähigkeit auf.

## Patentansprüche

1. Thermoplastische Formmasse enthaltend
a) 25,0 bis 64,5 Gew.-% mindestens eines thermoplastischen Polyamids als Komponente A,
b) 2,0 bis 8,0 Gew.-% mindestens eines Phosphazens der allgemeinen Formel (IX) oder (X) 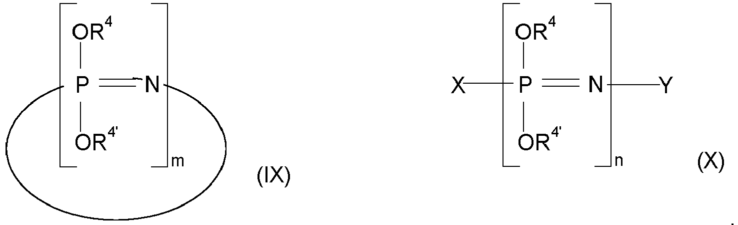
worin m eine ganze Zahl von 3 bis 25 ist und R⁴ und R^{4'} gleich oder verschieden sind und für C₁-C₂₀-Alkyl, C₆-C₃₀-Aryl, C₆-C₃₀-Arylalkyl oder C₆-C₃₀-Alkyl substituiertes Aryl stehen oder lineare Phosphazene der allgemeinen Formel (X),
n für 3 bis 1000 und X für -N = P(OPh)₃ oder -N = P(O)OPh und Y für -P(OPh)₄ oder -P(O)(OPh)₂ steht,
als Komponente B,
c) 1,5 bis 6,0 Gew.-% mindestens eines aliphatischen oder aromatischen Esters der Phosphorsäure oder Polyphosphorsäure als Komponente C,
d) 5,0 bis 30,0 Gew.-% mindestens eines mit Metallphosphinats oder Phosphinsäuresalzes der allgemeinen Formel (I) oder Diphosphinsäuresalzes der allgemeinen Formel (II) oder deren Polymere 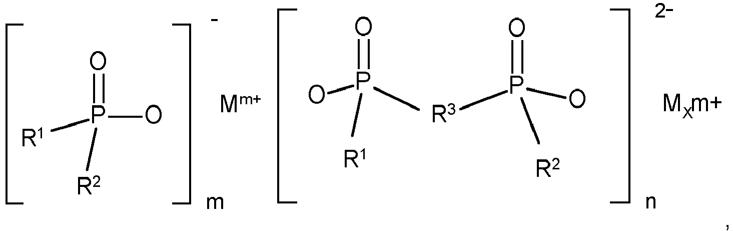 worin
R¹, R² gleich oder verschieden sind und Wasserstoff, C₁-C₆-Alkyl, linear oder verzweigt, und/oder Aryl bedeuten;
R³ C₁-C₁₀-Alkylen, linear oder verzweigt, C₆-C₁₀-Arylen, -Alkylarylen oder -Arylalkylen;
M Mg, Ca, AI, Sb, Sn, Ge, Ti, Zn, Fe, Zr, Ce, Bi, Sr, Mn, Li, Na, K und/oder eine protonierte Stickstoffbase;
m 1 bis 4; n 1 bis 4; x 1 bis 4 bedeuten, vorzugsweise m = 3, x = 3,
als Komponente D,
e) 26,0 bis 65,0 Gew.-% Glasfasern als Komponente E,
f) 0 bis 10,0 Gew.-% weiterer Hilfsstoffe als Komponente F, wobei die Gesamtmenge der Komponenten A bis E 100,0 Gew.-% ergibt.

2. Thermoplastische Formmasse nach Anspruch 1, **dadurch gekennzeichnet, dass** als Komponente B ein cyclisches Phenoxyphosphazen mit mindestens 3 Phenoxyphosphazen-Einheiten eingesetzt wird.

3. Thermoplastische Formmasse nach Anspruch 1 oder 2, **dadurch gekennzeichnet, dass** Komponente C ausgewählt ist aus aromatischen Polyphosphaten.

4. Thermoplastische Formmassen nach einem der Ansprüche 1 bis 3, **dadurch gekennzeichnet, dass** in Komponente D R¹, R² gleich oder verschieden sind und Wasserstoff, Methyl, Ethyl, n-Propyl, Isopropyl, n-Butyl, tert.-Butyl, n-Pentyl und/oder Phenyl bedeuten und R³ Methylen, Ethylen, n-Propylen, Isopropylen, n-Butylen, tert.-Butylen, n-Pentylen, n-Octylen oder n-Dodecylen, Phenylen oder Naphthylen; Methylphenylen, Ethylphenylen, tert.-Butylphenylen, Methylnaphthylen, Ethylnaphthylen oder tert.-Butylnaphthylen, Phenylmethylen, Phenylethylen, Phenylpropylen oder Phenylbutylen bedeutet.

5. Thermoplastische Formmasse nach einem der Ansprüche 1 bis 4, **dadurch gekennzeichnet, dass** Komponente A ein Blend aus mindestens einem aliphatischen Polyamid und mindestens einem teilaromatischen oder aromatischen Polyamid ist.

6. Thermoplastische Formmasse nach Anspruch 1, **dadurch gekennzeichnet, dass** Komponente B in einer Menge von 2,0 bis 6,0 Gew.-%, vorzugsweise 3,0 bis 5,0 Gew.-%, bezogen auf die Gesamtmenge der Komponenten A bis E, die 100,0 Gew.-% ergibt, eingesetzt wird.

7. Thermoplastische Formmasse nach einem der Ansprüche 1 bis 6, **dadurch gekennzeichnet, dass** als Komponente C 2,5 bis 5,5 Gew.-%, vorzugsweise 3,0 bis 5,0 Gew.-%, mindestens eines aliphatischen oder aromatischen Esters der Phosphorsäure oder Polyphosphorsäure eingesetzt werden.

8. Verfahren zur Herstellung von thermoplastischen Formmassen nach einem der Ansprüche 1 bis 7 durch Vermischen der Inhaltsstoffe.

9. Verwendung von thermoplastischen Formmassen nach einem der Ansprüche 1 bis 7 zur Herstellung von Formkörpern, Fasern oder Folien.

10. Formkörper, Fasern oder Folien aus einer thermoplastischen Formmasse nach einem der Ansprüche 1 bis 7.

11. Verfahren zur Herstellung von Formkörpern, Fasern oder Folien nach Anspruch 10 durch Aufschmelzen, Extrudieren und nachfolgende Formgebung einer thermoplastischen Formmasse nach einem der Ansprüche 1 bis 7.

## Claims

1. A thermoplastic molding material comprising
a) 25.0 to 64.5 wt% of at least one thermoplastic polyamide as component A,
b) 2.0 to 8.0 wt% of at least one phosphazene of general formula (IX) or (X) 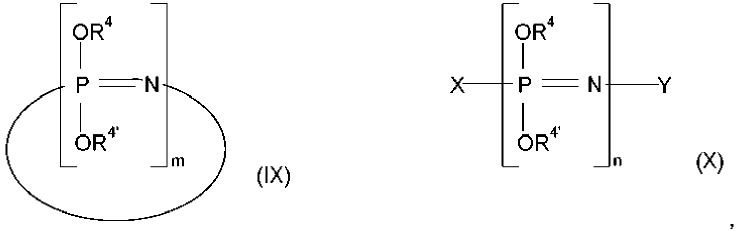
in which m is an integer from 3 to 25 and R⁴ and R^{4'} are identical or different and represent C₁-C₂₀-alkyl-, C₆-C₃₀-aryl-, C₆-C₃₀-arylalkyl- or C₆-C₃₀-alkyl-substituted aryl or linear phosphazenes of general formula (X),
n represents 3 to 1000 and X represents -N = P(OPh)₃ or -N = P(O)OPh and Y represents -P(OPh)₄ or -P(O)(OPh)₂, as component B,
c) 1.5 to 6.0 wt% of at least one aliphatic or aromatic ester of phosphoric acid or polyphosphoric acid as component C,
d) 5.0 to 30.0 wt% of at least one metal phosphinate or phosphinic acid salt of general formula (I) or diphosphinic acid salt of general formula (II) or polymers thereof 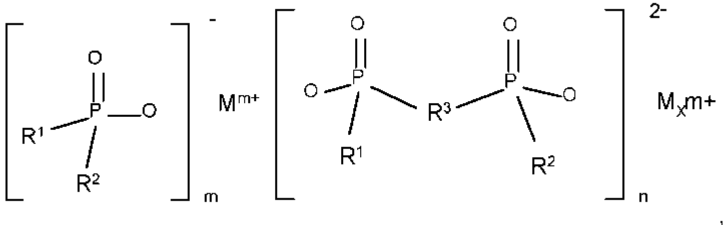 in which
R¹, R² are identical or different and represent hydrogen, C₁-C₆-alkyl, linear or branched, and/or aryl;
R³ represents C₁-C₁₀-alkylene, linear or branched, C₆-C₁₀-arylene, -alkylarylene or -arylalkylene;
M represents Mg, Ca, Al, Sb, Sn, Ge, Ti, Zn, Fe, Zr, Ce, Bi, Sr, Mn, Li, Na, K and/or a protonated nitrogen base;
m = 1 to 4; n = 1 to 4; x = 1 to 4, preferably m = 3, x = 3,
as component D,
e) 26.0 to 65.0 wt% of glass fibers as component E,
f) 0 to 10.0 wt% of further assistants as component F, wherein the total of components A to E sums to 100.0 wt%.

2. The thermoplastic molding material according to claim 1, wherein a cyclic phenoxyphosphazene having at least 3 phenoxyphosphazene units is employed as component B.

3. The thermoplastic molding material according to claim 1 or 2, wherein component C is selected from aromatic polyphosphates.

4. The thermoplastic molding materials according to any of claims 1 to 3, wherein in component D R¹, R² are identical or different and represent hydrogen, methyl, ethyl, n-propyl, isopropyl, n-butyl, tert-butyl, n-pentyl and/or phenyl and R³ represents methylene, ethylene, n-propylene, isopropylene, n-butylene, tertbutylene, n-pentylene, n-octylene or n-dodecylene, phenylene or naphthylene; methylphenylene, ethylphenylene, tert-butylphenylene, methylnaphthylene, ethylnaphthylene or tert-butyl naphthylene, phenylmethylene, phenylethylene, phenylpropylene or phenylbutylene.

5. The thermoplastic molding material according to any of claims 1 to 4, wherein component A is a blend of at least one aliphatic polyamide and at least one semiaromatic or aromatic polyamide.

6. The thermoplastic molding material according to claim 1, wherein component B is employed in an amount of 2.0 to 6.0 wt%, preferably 3.0 to 5.0 wt%, based on the total of components A to E which sums to 100 wt%.

7. The thermoplastic molding material according to any of claims 1 to 6, wherein 2.5 to 5.5 wt%, preferably 3.0 to 5.0 wt%, of at least one aliphatic or aromatic ester of phosphoric acid or polyphosphoric acid are employed as component C.

8. A process for producing thermoplastic molding materials according to any of claims 1 to 7 by mixing the ingredients.

9. The use of thermoplastic molding materials according to any of claims 1 to 7 for producing molded articles, fibers or films.

10. A molded article, fibers or films made of a thermoplastic molding material according to any of claims 1 to 7.

11. A process for producing molded articles, fibers or films according to claim 10 by melting, extruding and subsequent molding of a thermoplastic molding material according to any of claims 1 to 7.

## Revendications

1. Masse de moulage thermoplastique contenant
a) 25,0 à 64,5% en poids d'au moins un polyamide thermoplastique en tant que composant A,
b) 2,0 à 8,0% en poids d'au moins un phosphazène de formule générale (IX) ou (X) 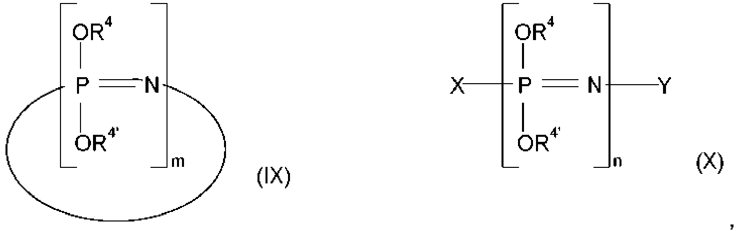
dans laquelle m représente un nombre entier de 3 à 25 et R⁴ et R^{4'} sont identiques ou différents et représentent C₁-C₂₀-alkyle, C₆-C₃₀-aryle, C₆-C₃₀-arylalkyle ou aryle substitué par C₆-C₃₀-alkyle ou des phosphazènes linéaires de formule générale (X),
n représente 3 à 1000 et X représente -N=P(OPh)₃ ou - N=P(O)OPh et Y représente -P(OPh)₄ ou -P(O)(OPh)₂,
en tant que composant B,
c) 1,5 à 6,0% en poids d'au moins un ester aliphatique ou aromatique de l'acide phosphorique ou de l'acide polyphosphorique en tant que composant C,
d) 5,0 à 30,0% en poids d'au moins un phosphinate métallique ou sel de l'acide phosphinique de formule générale (I) ou sel de l'acide diphosphinique de formule générale (II) ou leurs polymères 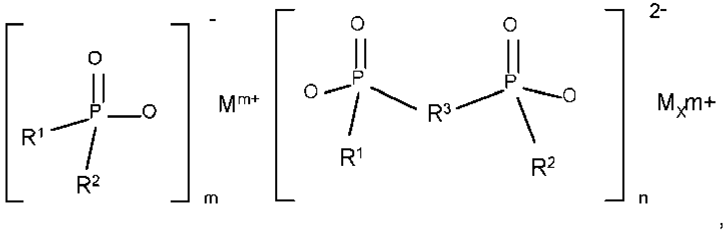 dans laquelle
R¹, R² sont identiques ou différents et signifient hydrogène, C₁-C₆-alkyle, linéaire ou ramifié, et/ou aryle ;
R³ signifie C₁-C₁₀-alkylène, linéaire ou ramifié, C₆-C₁₀-arylène, C₆-C₁₀-alkylarylène ou C₆-C₁₀-arylalkylène ; M signifie Mg, Ca, Al, Sb, Sn, Ge, Ti, Zn, Fe, Zr, Ce, Bi, Sr, Mn, Li, Na, K et/ou une base azotée protonée ; m signifie 1 à 4 ; n signifie 1 à 4 ; x signifie 1 à 4, de préférence m = 3, x = 3,
en tant que composant D,
e) 26,0 à 65,0% en poids de fibres de verre en tant que composant E,
f) 0 à 10,0% en poids d'autres adjuvants en tant que composant F,
la quantité totale des composants A à E valant 100,0% en poids.

2. Masse de moulage thermoplastique selon la revendication 1, **caractérisée en ce qu'**on utilise, comme composant B, un phénoxyphosphazène cyclique comprenant au moins 3 motifs phénoxyphosphazène.

3. Masse de moulage thermoplastique selon la revendication 1 ou 2, **caractérisée en ce que** le composant C est choisi parmi les polyphosphates aromatiques.

4. Masses de moulage thermoplastiques selon l'une des revendications 1 à 3, **caractérisées en ce que**, dans le composant D, R¹, R² sont identiques ou différents et signifient hydrogène, méthyle, éthyle, n-propyle, isopropyle, n-butyle, tert-butyle, n-pentyle et/ou phényle et R³ signifie méthylène, éthylène, n-propylène, isopropylène, n-butylène, tert-butylène, n-pentylène, n-octylène ou n-dodécylène, phénylène ou naphtylène ; méthylphénylène, éthylphénylène, tert-butylphénylène, méthylnaphtylène, éthylnaphtylène ou tertbutylnaphtylène, phénylméthylène, phényléthylène, phénylpropylène ou phénylbutylène.

5. Masse de moulage thermoplastique selon l'une des revendications 1 à 4, **caractérisée en ce que** le composant A est un mélange d'au moins un polyamide aliphatique et d'au moins un polyamide partiellement aromatique ou aromatique.

6. Masse de moulage thermoplastique selon la revendication 1, **caractérisée en ce que** le composant B est utilisé en une quantité de 2,0 à 6,0% en poids, de préférence de 3,0 à 0,5% en poids, par rapport à la quantité totale des composants A à E, qui vaut 100,0% en poids.

7. Masse de moulage thermoplastique selon l'une des revendications 1 à 6, **caractérisée en ce qu'**on utilise, comme composant C, 2,5 à 5,5% en poids, de préférence 3,0 à 5,0% en poids, d'au moins un ester aliphatique ou aromatique de l'acide phosphorique ou polyphosphorique.

8. Procédé pour la préparation de masses de moulage thermoplastiques selon l'une des revendications 1 à 7 par mélange des constituants.

9. Utilisation de masses de moulage thermoplastiques selon l'une des revendications 1 à 7 pour la préparation de corps moulés, de fibres ou de feuilles.

10. Corps moulés, fibres ou feuilles en une masse de moulage thermoplastique selon l'une des revendications 1 à 7.

11. Procédé pour la préparation de corps moulés, de fibres ou de feuilles selon la revendication 10 par fusion, extrusion ou façonnage consécutif d'une masse de moulage selon l'une des revendications 1 à 7.
